# EUROPÄISCHE PATENTSCHRIFT

(11) **EP 0 864 536 B1**
(45) Veröffentlichungstag und Bekanntmachung des Hinweises auf die Patenterteilung: **28.05.2003**
(21) Anmeldenummer: 98103802.9
(22) Anmeldetag: 04.03.1998
(51) Int. Cl.: C01F 11/46, C04B 11/26, C04B 22/14, C04B 11/05

(54) **Verfahren zur stofflichen Verwertung von mit organischem Material verunreinigtem Gips**
Process for the exploitation of gypsum contaminated with organic impurities
Procédé pour l'exploitation du gypse contenant des impuritées organiques

(30) Priorität: 05.03.1997 DE 19708907
(43) Veröffentlichungstag der Anmeldung: 16.09.1998
(73) Patentinhaber: GFR Gesellschaft für die Aufbereitung und Verwertung von Reststoffen mbH, 97006 Würzburg (DE)
(72) Erfinder: Demmich, Jörg, Dr.-Ing., 97084 Würzburg (DE); Weissflog, Eckhard, Dr., 97234 Lindflur (DE); Kempf, Wolf-Dieter, Dr., 97346 Iphofen (DE)
(74) Vertreter: Werner, Hans-Karsten, Dr.Dipl.-Chem.

(56) Entgegenhaltungen:
- DE-A- 3 827 612
- DE-A- 3 827 613
- GB-A- 324 374
- US-A- 5 324 501
- DATABASE WPI Section Ch, Week 7746 Derwent Publications Ltd., London, GB; Class L02, AN 77-82066Y XP002066774 "Calcining pulverous gypsum - by adding to a fluidised layer of a solid medium and heating" & JP 52 119 497 A (NIPPON CARBIDE KOGYO KK) , 6.Oktober 1977
- DATABASE WPI Section Ch, Week 8022 Derwent Publications Ltd., London, GB; Class J09, AN 80-39272C XP002066773 "Efficient powder burning process in air-burning furnace" & JP 55 054 029 A (SUMITOMO CEMENT CO) , 21.April 1980
- ED.: BARTHOLOM , E.: "ULLMANNS ENCYKLOPAEDIE DER TECHNISCHEN CHEMIE, 4. Auflage, Band 12" 1976 , VERLAG CHEMIE , WEINHEIM, DE XP002066790 * Seite 309 - Seite 311 *

## Beschreibung

Gegenstand der vorliegenden Erfindung sind Verfahren zur stofflichen Verwertung von mit organischem Material verunreinigtem Gips, insbesondere von Abfällen von Vollgipsplatten, Gipskarton- und/oder Gipsfaserplatten und/oder mineralisch gebundenen Holzspanplatten (z.B. Heraklit®-Platten) und/oder Abfallgipsen der Kraftwerksindustrie, denen gegebenenfalls andere kohlenstoff- und/oder gipshaltige Abfälle zugemischt wurden sowie die Verwendung der dabei anfallenden Produkte.

Die DE 39 13 822 C2 beschreibt ein Verfahren zur Herstellung chloridarmer Gipsprodukte aus calciumhaltigen Rückständen trockener oder nasser Abgasreinigungsanlagen, die Sulfite, Chloride, Sulfate, Hydroxide, Carbonate oder Oxide des Calciums oder deren Gemische enthalten durch Oxidation und pyrohydrolytische Chloridspaltung, wobei die Rückstände zusammen mit schwefelhaltigen, weitgehend Ca-freien Substanzen und zusammen mit Wasser, Wasserdampf und/oder wasserabspaltender Substanzen in einer zirkulierenden Wirbelschicht in Anwesenheit eines O₂-haltigen, heißen Gases derart zur Reaktion gebracht werden, daß die nicht als Sulfit oder Sulfat gebundenen Calciumanteile der Rückstände zu CaSO₄ sulfatisiert werden und als Produkt ein chloridarmer Gipsanhydrit erzeugt wird. Das Ausgangsmaterial ist somit nicht mit organischem Material verunreinigt.

Die DE 31 46 143 A1 beschreibt ein Verfahren zur Herstellung von synthetischem Anhydrit in feinstkristalliner Form aus einem feinstkristallinem Gemisch eines calciumsulfithalbhydrat- und calciumsulfatdihydrathaltigen Zwischenproduktes einer Rauchgasentschwefelung, bei dem in Anwesenheit von Sauerstoff durch eine Wärmebehandlung im Temperaturbereich von 200 bis 900°C der calciumsulfithalbhydrathaltige Anteil des Zwischenproduktes zunächst zu Calciumsulfit dehydratisiert und anschließend zu Calciumsulfat oxidiert und der calciumsulfatdihydrathaltige Anteil des Zwischenproduktes dehydratisiert wird. Auch dieses Material ist nicht mit organischem Material verunreinigt.

Die FR 509.632 beschreibt die Wiederverwendung von Vollgipsplatten, die kein organisches Material enthalten durch Brennen bei 200 bis 350°C.

Die GB 324.374 beschreibt die Wiederverwendung von verunreinigtem Gipsmaterial durch Auswaschen der löslichen Bestandteile und anschließendes Brennen bei 90 bis 500°C.

Bei der Produktion, bei der Be- und Verarbeitung von Gipsplatten sowie beim Abbruch und/oder der Reparatur von Gebäuden aller Art fallen in zunehmenden Maße Gipskarton- und/oder Gipsfaserplatten (z.B. Fermacell®), Vollgipsplatten oder auch mineralisch gebundene Holzspanplatten (z.B. Heraklit®-Platten) an.

Paragraph 4, Absatz 3 des neuen Kreislaufswirtschafts- und Abfallgesetzes fordert die vorzugsweise stoffliche Wiederverwertung derartiger Materialien durch Nutzung der stofflichen Eigenschaften. Da dieses Material auch in vorzerkleinerter Form zur Herstellung neuer Gipskarton- und/oder Gipsfaserplatten praktisch nicht in Frage kommen und mineralisch gebundene Holzspäne zu noch viel größeren Problemen führen, wurden diese Materialien bisher vorzugsweise deponiert. Aufgrund des Gehaltes an organischen Substanzen und wasserlöslichen Sulfaten wird die Deponierung dieser Abfälle auf Siedlungsabfalldeponien zukünftig nicht mehr möglich sein.

Darüber hinaus fallen in der Praxis verunreinigte Abfallgipse und gipshaltige Abfälle mit hohem Kohlenstoffgehalt an. Einige dieser Abfälle sind so zusammengesetzt oder können in der Form miteinander vermischt werden, daß hieraus puzzolanisch, hydraulisch und/oder latenthydraulisch abbindende Produkte entstehen.

In all diesen Fällen stört aber der Gehalt an organischen Substanzen, insbesondere Kohlenstoff, welcher die Verarbeitungs- sowie die physikalisch-technologischen Eigenschaften der so erhaltenen Produkte negativ beeinflußt. Dabei stört elementarer Kohlenstoff in ähnlicher Weise wie Holz oder Cellulosefasern.

Die Erfindung hat sich die Aufgabe gestellt, diese in zunehmendem Maße anfallenden Produkte einer sinnvollen, vor allem vorzugsweise stofflichen Verwertung zuzuführen.

Es wurde jetzt gefunden, daß diese Aufgabe dadurch gelöst werden kann, daß man die anfallenden gipshaltigen Materialien auf Körnungen von maximal 2 cm vorzerkleinert und unter geregelter Zufuhr von überschüssigem Sauerstoff bei Temperaturen von 450 bis 950°C zum Anhydrit brennt. Vorzugsweise werden die Abfälle auf maximale Körnungen von 1 cm vorzerkleinert und bei Temperaturen zwischen 500 und 900°C zum Anhydrit gebrannt. Dabei ist darauf zu achten, daß während des Brennvorgangs überschüssiger Sauerstoff geregelt zugeführt wird. Nur bei geregelter Zufuhr von Sauerstoff können unter den Bedingungen des Brennens die kohlenstoffhaltigen Komponenten wie organische Fasern, organische Zumischungen der abgebundenen Gipse sowie sonstige brennbare organische Verunreinigungen vollständig in CO₂ überführt werden, so daß diese Verunreinigungen den fertigen Anhydrit oder die anhydrithaltigen Bindemittel qualitativ nicht mehr negativ beeinflussen können.

Erfindungswesentlich ist, daß die gegebenenfalls vorsortierten Materialien von groben Verunreinigungen wie Nägeln, Steinen, Mörtel etc. befreit und vorzerkleinert werden, so daß der Sauerstoff während des Brennvorgangs auch in die Partikel gelangen kann und die kohlenstoffhaltigen Verbindungen vollständig verbrennen können. Die Sauerstoffzufuhr und die Brennbedingungen werden dabei so aufeinander abgestimmt, daß sich weder organische Schadstoffe wie PCDD, PCDF bilden können noch durch Reduktion der Sulfate Sulfide entstehen.

Vorzugsweise findet der Brennvorgang in einem Drehrohrofen oder in einer Wirbelschicht statt. Dabei wird der Energiegehalt der kohlenstoffhaltigen Verbindungen der Abfälle beim Brennvorgang ausgenutzt.

Sofern das Material zu feinteilig oder staubig ist, kann es vorteilhaft sein, es vor dem Brennvorgang wieder zu kompaktieren oder zu pelletisieren. Die Durchmesser dieser Teilchen sollten aber wiederum maximal 2 cm, vorzugsweise nur 1 cm betragen. Gemische mit relativ engen Korngrößenverteilungen verhalten sich beim Brennvorgang gleichmäßig, so daß das gewünschte Ergebnis des Brennvorganges leicht und sicherer erzielt wird.

Anhydrit aus Rauchgasgips wird in zunehmendem Maße hergestellt durch einen Brennvorgang in Zyklonen im Gegenstrom mit Heißluft und anschließender Kühlung mit Kaltluft. Dieses Verfahren wird vorzugsweise durchgeführt in einer sogenannten POLCAL-Anlage der Firma Krupp Polysius; vgl. J. Kappe in Novem, 1, Environment & Technology November 1991. Es wurde jetzt festgestellt, daß dieses Verfahren auch mit dem erfindungsgemäß verwendeten verunreinigten Gips durchgeführt werden kann, sofern es auf maximale Körnungen von 0,5 cm vorzerkleinert ist. Besonders gut läuft das Verfahren, wenn nur die Kornfraktion bis 0,2 cm eingesetzt wird. Gröberteilige Fraktionen sollten beispielsweise durch Windsichten abgetrennt und danach nochmals vermahlen werden.

Da die eingesetzten Materialien gelegentlich mit Quecksilber und anderen Schwermetallen verunreinigt sind, sollten die Abgase des Brennprozesses einer Reinigung unterworfen werden, die vorzugsweise auch die gesonderte Abtrennung von Quecksilber und flüchtigen Schwermetallen gestattet.

Zur besseren Verwertung der eingesetzten Brennenergie sowie der energetisch verwerteten kohlenstoffhaltigen Verunreinigungen der eingesetzten Materialien werden die Rohbrüden des Brennvorgangs vorzugsweise zur Vorheizung und/oder Anfeuchtung oder Kompaktierung der Ausgangsmaterialien verwendet.

Das erfindungsgemäße Verfahren gestattet somit zunächst einmal eine stoffliche Verwertung des Gipsgehaltes der eingesetzten Stoffe, beispielsweise als Anhydritbinder gemäß DIN 4208 oder als Estrich nach DIN 18560. Darüber hinaus können Abfälle enthaltend SiO₂, Al₂O₃, Fe₂O₃ und CaO sowie Alkaliverbindungen in der Form und den Mengen zugemischt werden, daß hieraus in einem Prozeßschritt puzzolanisch, hydraulisch und/oder latenthydraulisch abbindende Produkte entstehen. Zu derartig geeigneten Abfällen gehören beispielsweise kohlenstoffhaltige Flugaschen aus Steinkohle- und Braunkohlefeuerungen sowie Steinkohle- und Braunkohleflugaschen, Rückstände aus der Papierschlammverbrennung oder Verbrennung von Holz. Diese und ähnliche Abfälle enthalten höhere Anteile an Alkaliverbindungen, die zumindest bereits einen Teil der gegebenenfalls notwendigen Alkalianregerzugabe ersetzen können.

Besonders günstig ist, wenn Reststoffe eingesetzt werden mit einem hohen Gehalt an freiem CaO/Ca(OH)₂ von über 10 MA-%. Hierzu gehören bestimmte Braunkohleaschen, bestimmte Steinkohleflugaschen, Rückstände aus Trockenadditivverfahren und gewisse Rauchgasentschwefelungsprodukte. Da einige dieser Produkte einen hohen Chloridgehalt aufweisen, kann dies einerseits zur Beeinflussung des Abbindeverhaltens der erhaltenen Bindemittel verwendet werden. Bei sehr hohem Chloridgehalt ist es aber andererseits auch möglich, diesen in an sich bekannter Weise in Form von HCl-Gas abzutrennen und aus dem Verfahren auszuschleusen. Dieser hohe HCl-Gehalt kann auch zur Herstellung von Salzsäure verwendet werden.

Sofern der entstandene Anhydrit als Anhydritbinder oder als Estrich eingesetzt werden soll, sollte der Gehalt an nicht organischen und beim Brennvorgang nicht flüchtigen Verunreinigungen bezogen auf den Gehalt von CaSO₄ unter 15 % liegen. Sofern der beim Brennen entstehende Anhydrit Bestandteil von puzzolanisch, hydraulisch oder latenthydraulisch abbindenden Produkten werden soll, sollte der Gehalt an nicht organischen und beim Brennvorgang nicht flüchtigen Verunreinigungen bezogen auf den Gehalt von CaSO₄ unter 65 % liegen. Durch geeignete Zusammensetzung der Gemische ist es möglich, Bindemittel zu erhalten, die innerhalb vorgegebener und festgelegter Zeiträume abbinden und die erforderlichen Mindestfestigkeiten erreichen.

Schließlich kann der erfindungsgemäß hergestellte Anhydrit sogar in relativ verunreinigter Form verwendet werden als Abbinderegler für Zemente, indem man ihn zusammen mit Zementklinker vermahlt.

Insbesondere beim Brennen in einer Wirbelschicht können zusätzlich schwefelhaltige Brennstoffe eingesetzt werden, die während des Verfahren mit dem freien CaO/Ca(OH)₂ zu weiterem Anhydrit reagieren. Bei Verwendung von sulfithaltigen Rauchgasreinigungsprodukten können auch Binderkombinationen hergestellt werden, die sich unterhalb der Zersetzungstemperatur des Sulfites erbrennen lassen. Bei höheren Temperaturen kann wiederum der Gehalt an Sulfit durch den überschüssigen Sauerstoff zum Sulfat oxidiert werden, so daß weiterer Anhydrit entsteht.

Im Gegensatz zum bisher bekannten Stand der Technik ist die Herstellung von Anhydrit aus dem sulfithaltigen Rauchgasreinigungsrückständen nicht der Hauptzweck des Verfahrens. Vielmehr dient ein geringer Sulfitgehalt des Abfalls zur Steuerung des Sauerstoffüberschusses. Weiterhin vermindert er die Bildung von Cr(VI) aus Cr(III) und PCDD sowie PCDF.

Insgesamt handelt es sich somit um ein sehr flexibel einsetzbares Verfahren, bei dem je nach der Zusammensetzung der eingesetzten Materialien einerseits und der Brennbedingungen andererseits wertvolle Anhydrite (Mindestgehalt CaSO₄ 85 Masse-%) oder anhydrithaltige Bindemittel (Mindestgehalt CaSO₄ 35 Masse-%) erzeugt werden und bei welchem die sonstigen Komponenten stofflich oder energetisch verwertet werden.

Die anhydrithaltigen Bindemittel besitzen gegenüber dem reineren Anhydrit ein verschobenes Anwendungsspektrum in Richtung Landbau, Dammbau und Bergbaumörtel sowie Abbinderegler in Zement. Die für die Anwendung gewünschten Eigenschaften werden über die Kornverteilung (Mahlfeinheit), das Abbindeverhalten und die Festigkeitsentwicklung durch die jeweiligen Anteile von Anhydrit sowie Zusätze von verschiedenen Flugaschen, Papierschlamm und Holzverbrennungsaschen eingestellt. Eine kostenintensive Aufmahlung des Anhydrits oder der anhydrithaltigen Bindemittel ist nur dann notwendig, wenn die gewünschten Produkteigenschaften über die Variation der Vorbehandlung der thermischen Prozeßparameter und Zusatzstoffe nicht unmittelbar erreicht werden können. Auf alle Fälle ist es durch eine dem thermischen Prozeßschritt nachgeschaltete Aufmahlung oder Absiebung möglich, das Produkt den jeweiligen Anforderungen anzupassen.

Auf die bisher übliche Deponierung der Ausgangsmaterialien und Abfälle kann somit in Zukunft verzichtet werden. Auch der Einsatz im Untertageversatz stellt nur eine zweitrangige Verwertung dar und kann erfindungsgemäß durch eine gemäß Paragraph 5, Absatz 2 des Kreislaufswirtschafts- und Abfallgesetz geforderte höherwertige stoffliche und energetische Verwertung abgelöst werden.

Das Verfahren stellt somit eine ökonomisch und ökologisch wertvolle Lösung bestehender Probleme dar.

## Patentansprüche

1. Verfahren zur stofflichen Verwertung von mit organischem Material verunreinigtem Gips, insbesondere von Abfällen von Vollgipsplatten, Gipskarton- und/oder Gipsfaserplatten und/oder mineralisch gebundenen Holzspanplatten und/oder Abfallgipsen der Kraftwerksindustrie, denen gegebenenfalls andere kohlenstoff- und/oder gipshaltige Abfälle zugemischt wurden, **dadurch gekennzeichnet, daß** diese Abfälle auf Körnungen von maximal 2 cm vorzerkleinert und unter geregelter Zufuhr von überschüssigem Sauerstoff bei Temperaturen von 450 bis 950°C zum Anhydrit gebrannt werden.

2. Verfahren gemäß Anspruch 1, **dadurch gekennzeichnet, daß** das Ausgangsmaterial auf maximale Körnungen von 1 cm vorzerkleinert wird.

3. Verfahren gemäß Anspruch 1 oder 2, **dadurch gekennzeichnet, daß** der Brennvorgang in einem Drehrohrofen oder einer Wirbelschicht erfolgt.

4. Verfahren gemäß einem der Ansprüche 1 bis 3, **dadurch gekennzeichnet, daß** die Gemische vor dem Brennvorgang vorkompaktiert oder pelletisiert werden auf Körnungen von maximal 2 cm.

5. Verfahren gemäß Anspruch 1, **dadurch gekennzeichnet, daß** das Ausgangsmaterial auf maximale Körnungen von 0,5 cm, vorzugsweise bis 0,2 cm,vorzerkleinert wird und der Brennvorgang in Zyklonen im Gegenstrom mit Heißluft durchgeführt wird und anschließend mit kalter Luft gekühlt wird.

6. Verfahren gemäß einem der Ansprüche 1 bis 5, **dadurch gekennzeichnet, daß** die Abgase des Brennprozesses einer Reinigung unterworfen werden, die auch die Abtrennung von HCl, Quecksilber und flüchtigen Schwermetallen gestattet.

7. Verfahren gemäß einem der Ansprüche 1 bis 6, **dadurch gekennzeichnet, daß** die Rohbrüden des Brennvorgangs zur Vorheizung und/oder Anfeuchtung oder Kompaktierung der Ausgangsmaterialien eingesetzt werden.

8. Verfahren gemäß einem der Ansprüche 1 bis 7, **dadurch gekennzeichnet, daß** ein Ausgangsmaterial eingesetzt wird, dessen Gehalt an nichtorganischen und beim Brennvorgang nicht flüchtigen Verunreinigungen bezogen auf den Gehalt von CaSO₄ unter 65% liegt.

9. Verfahren gemäß Anspruch 8, **dadurch gekennzeichnet, daß** ein Ausgangsmaterial eingesetzt wird, dessen Gehalt an nichtorganischen und beim Brennvorgang nicht flüchtigen Verunreinigungen bezogen auf den Gehalt von CaSO₄ unter 15% liegt.

10. Verfahren gemäß Anspruch 8 oder 9, **dadurch gekennzeichnet, daß** vor dem Brennvorgang dem verunreinigten Gips Abfälle enthaltend SiO₂, Al₂O₃, F₂O₃, CaO und Alkaliverbindungen in der Form und der Menge zugesetzt werden, daß aus den Verunreinigungen und den zugesetzten Abfällen puzzolanisch, hydraulisch und/oder latenthydraulisch abbindende Produkte entstehen.

11. Verfahren gemäß einem der Ansprüche 1 bis 10, **dadurch gekennzeichnet, daß** Rauchgasreinigungsprodukte enthaltend überschüssiges Ca(OH)₂ und Sulfite zugesetzt werden.

12. Verfahren gemäß einem der Ansprüche 1 bis 11, **dadurch gekennzeichnet, daß** das fertige Produkt vor der Verwendung feinvermahlen wird.

13. Verfahren gemäß einem der Ansprüchen 1 bis 12, **dadurch gekennzeichnet, daß** als SiO₂-, Al₂O₃-, Fe₂O₃-, CaO- und Alkali-haltige Stoffe Flugaschen aus Stein- und Braunkohlenfeuerungen und/oder Rückstände aus der Papierverbrennung und/oder der Holzverbrennung eingesetzt werden.

14. Verfahren gemäß einem der Ansprüche 8 bis 13, **dadurch gekennzeichnet daß** als weitere Schritt der erhaltene Anhydrit zur Herstellung von Estrich verwendet wird.

15. Verfahren gemäß einem der Ansprüche 8 bis 13, **dadurch gekennzeichnet daß** als weitere Schritt der erhaltene Anhydrit als Anhydritbinder verwendet wird.

16. Verfahren gemäß einem der Ansprüche 8 bis 13, **dadurch gekennzeichnet daß** als weitere Schritt der erhaltene Anhydrit zum Landbau, Dammbau oder als Bergbaumörtel verwendet wird.

17. Verfahren gemäß einem oder mehreren der Ansprüche 8 bis 13, **dadurch gekennzeichnet daß** als weitere Schritt der erhaltene Anhydrit als Abbinderegler für Zemente verwendet wird.

## Claims

1. A process for the substance recycling of gypsum contaminated with organic material, in particular of solid gypsum board, sandwich-type gypsum board and/or gypsum fibre board and/or mineral-bonded wood chipboard waste materials and/or waste gypsum of the power station industry, which were optionally admixed with other carbon and/or gypsum containing waste materials, **characterized in that** said waste materials are crushed to particle sizes of 2 cm maximum and fired to the anhydrite with a controlled feed of excessive oxygen at temperatures from 450 to 950 °C.

2. The process according to claim 1, **characterized in that** the starting material is crushed to maximum particle sizes of 1 cm.

3. The process according to claims 1 or 2, **characterized in that** the firing process is performed in a rotary kiln or a fluidized bed.

4. The process according to any one of claims 1 to 3, **characterized in that** the mixtures are pre-compacted or pelletized to particle sizes of 2 cm maximum prior to the firing process.

5. The process according to claim 1, **characterized in that** the starting material is crushed to maximum particle sizes of 0.5 cm, preferably to 0.2 cm and the firing process is countercurrently performed in cyclones using hot air and subsequently the material is cooled with cold air.

6. The process according to any one of claims 1 to 5, **characterized in that** the waste gases of the firing process are subjected to a purification also enabling the separation of HCl, mercury and volatile heavy metals.

7. The process according to any one of claims 1 to 6, **characterized in that** the untreated vapour of the firing process is used for preheating and/or wetting or compacting the starting materials.

8. The process according to any one of claims 1 to 7, **characterized in that** a starting material having a content of non-organic contaminants being non-volatile during the firing process of less than 65 %, based on the CaSO₄ content, is used.

9. The process according to claim 8, **characterized in that** a starting material having a content of non-organic contaminants being non-volatile during the firing process of less than 15 %, based on the CaSO₄ content, is used.

10. The process according to claim 8 or 9, **characterized in that** prior to the firing process the contaminated gypsum is combined with waste containing SiO₂, Al₂O₃, Fe₂O₃, CaO and alkali compounds in a form and in an amount such that pozzolanically, hydraulically and/or latent hydraulically setting products are formed from the contaminants and the added waste.

11. The process according to any one of claims 1 to 10, **characterized in that** flue-gas purifying products containing excess Ca(OH)₂ and sulfites are added.

12. The process according to any one of claims 1 to 11, **characterized in that** the final product is finely ground prior to the use thereof.

13. The process according to any one of claims 1 to 12, **characterized in that** flue ashes from coal and brown coal fuels and/or residues from the incineration of paper and/or the incineration of wood are used as substances containing SiO₂, Al₂O₃, Fe₂O₃, CaO and alkali compounds.

14. The process according to any one of claims 8 to 13, **characterized in that** the obtained anhydrite is used for the manufacture of screed in an additional step.

15. The process according to any one of claims 8 to 13, **characterized in that** the obtained anhydrite is used as anhydrite binder in an additional step.

16. The process according to any one of claims 8 to 13, **characterized in that** the obtained anhydrite is used in agriculture, dam and embankment construction or as mining mortar in an additional step.

17. The process according to any one or more of claims 8 to 13, **characterized in that** the obtained anhydrite is used as setting modifier for cements in an additional step.

## Revendications

1. Procédé de recyclage matière de plâtre contaminé avec des matières organiques, notamment de résidus de plaques de plâtre plein, de plaques de placoplâtre et/ou de staff et/ou des panneaux de particules à liant minéral et/ou des plâtres de résidus de l'industrie des centrales électriques, auxquels sont mélangés éventuellement d'autres résidus carbonés ou gypseux, **caractérisé en ce que** ces résidus sont préalablement broyés à une taille de particules de 2 cm au maximum et sont calcinés, en présence d'un excès d'oxygène dont l'alimentation est réglée à des températures de 450° à 950° C pour former de l'anhydrite.

2. Procédé selon la revendication 1, **caractérisé en ce que** le matériau de base est préalablement broyé pour obtenir une taille de particules de 1 cm au maximum.

3. Procédé selon la revendication 1 ou 2, **caractérisé en ce que** le processus de calcination s'effectue dans un four rotatif ou dans un four à lit fluidisé.

4. Procédé selon une des revendications 1 à 3, **caractérisé en ce que** les mélanges sont préalablement compactés ou concassés en des granulés d'une taille de 2 cm au maximum avant de réaliser le processus de calcination.

5. Procédé selon la revendication 1, **caractérisé en ce que** le matériau de base est préalablement broyé pour former des particules d'une taille maximale de 0,5 cm, de préférence de 0,2 cm, et **en ce que** le processus de calcination s'effectue dans des cyclones, à contre-courant d'un flux d'air chaud, suivi d'un refroidissement par de l'air froid.

6. Procédé selon une des revendications de 1 à 5, **caractérisé en ce que** les gaz de combustion du processus de calcination sont soumis à une épuration, qui permet également de séparer le HCl, le mercure et les métaux lourds volatiles.

7. Procédé selon une des revendications de 1 à 6, **caractérisé en ce qu'**on utilise les vapeurs émises par le processus de calcination pour préchauffer et/ou humidifier ou compacter les matériaux de base.

8. Procédé selon une des revendications de 1 à 7, **caractérisé en ce qu'**on utilise un matériau de base dont la teneur en impuretés minérales et en impuretés non volatiles produites au cours du processus de calcination, rapportée à la teneur en CaSO₄, est inférieure à 65 %.

9. Procédé selon la revendication 8, **caractérisé en ce qu'**on utilise un matériau de base dont la teneur en impuretés minérales et en impuretés non volatiles produites au cours du processus de calcination, rapportée à la teneur en CaSO₄, est inférieure à 15 %.

10. Procédé selon la revendication 8 ou 9, **caractérisé en ce que**, préalablement au processus de calcination, on ajoute au plâtre contaminé des résidus contenant du SiO₂, de l' Al₂O₃, du F₂O₃, du CaO et des composés alcalins sous une forme et en une quantité telles que l'on obtient à partir de ces impuretés et de ces résidus ajoutés des produits durcissants ayant des propriétés pouzzolaniques, à prise hydraulique et/ou à prise hydraulique latente.

11. Procédé selon une des revendications de 1 à 10, **caractérisé en ce qu'**on ajoute des produits d'épuration de fumées contenant du Ca(OH)₂ en excès et du sulfite.

12. Procédé selon une des revendications de 1 à 11, **caractérisé en ce que** le produit fini est finement moulu avant d'être utilisé.

13. Procédé selon une des revendications de 1 à 12, **caractérisé en ce qu'**en tant que matières contenant du SiO₂, de l' Al₂O₃, du Fₑ₂O₃, du CaO et des composés alcalins, on utilise des cendres volantes produites dans des installations de chauffage à la houille ou à la lignite et/ou des résidus de combustion du papier et/ou de combustion du bois.

14. Procédé selon une des revendications de 8 à 13, **caractérisé en ce qu'**on utilise, au cours d'une autre étape, l'anhydrite obtenu dans la fabrication d'une chape en béton.

15. Procédé selon une des revendications de 8 à 13, **caractérisé en ce qu'**on utilise, au cours d'une autre étape, l'anhydrite obtenu comme un liant d'anhydrite.

16. Procédé selon une des revendications de 8 à 13, **caractérisé en ce qu'**on utilise, au cours d'une autre étape, l'anhydrite obtenu dans le génie rural, la construction de digues ou en tant que mortier pour l'exploitation des mines.

17. Procédé selon une ou plusieurs des revendications de 8 à 13, **caractérisé en ce qu'**on utilise, au cours d'une autre étape, l'anhydrite obtenu en tant que régulateur de prise pour les ciments.
